# EUROPEAN PATENT APPLICATION

(11) **EP 1 882 632 A2**
(43) Date of publication of application: **30.01.2008**
(21) Application number: 07111325.2
(22) Date of filing: 28.06.2007
(51) Int. Cl.: B65B 65/00, B65B 25/14, B65B 35/30

(54) **Machine for producing groups of roll products.**

(30) Priority: 26.07.2006 IT BO20060559
(71) Applicant: Tissue Logistics Solutions S.p.A, 40125 Bologna (IT)
(72) Inventor: Ponti, Alessandro, 41042 Fiorano Modenese (Modena) (IT); Dall'Omo, Davide, 40132 Bologna (IT); Pattuelli, Matteo, 48012 Bagnacavallo (Ravenna) (IT)
(74) Representative: Lanzoni, Luciano

(57) **Abstract**

A machine for producing groups (1) of products comprises: a station (3) for grouping a plurality of groups (1); a first surface (4) for receiving the plurality of groups (1) of products arriving from the station (3) to form a batch (L) of products; a first, programmable logic unit (5) for checking and controlling the grouping station (3) and the first surface (4); a palletising island (6) for groups (1) of products fed by the first surface (4) and comprising a second logic unit (7) for managing and programming at least two robotic units (8, 9) for handling the groups (1) of products, so as to obtain, respectively, individual layers (S) of two or more groups (1) of products, and relative positioning of the layers on pallets (10); means (11) for forming sub-batches (SL) starting with the original batch (L), when required, said means being positioned between the grouping station (3) and the first surface (4), and connected to the first logic unit (5); an interface unit (12), inserted between the first logic unit (5) and the second logic unit (7), and designed to allow a direct connection between the two units (5, 7), for programming at least the sub-batch (SL) forming means (11) directly by the second logic unit (7) according to the parameters for making up the layers (S) in the palletising island (6).

## Description

The present invention relates to a machine for producing groups of roll products, in particular, but without limiting the scope of the invention, for roll products for household and/or bathroom use.

It is well known that said machines for producing rolls consist of a plurality of stations which, along a machine extension line, divide and handle the products to form first the groups and then the end packs.

The "standard" configurations of the stations in such machines comprise:
- a feed unit for the roll products;
- a unit for dividing the roll products into groups;
- a unit for wrapping and closing the groups of products;
- a unit for transporting and positioning a plurality of these groups of products (called a batch - which may therefore comprise one or more of the ready-wrapped groups of products) for
- a unit for bagging two or more batches of products or, alternatively, for the simple passage of the loose batches through the bagging unit which is switched off, towards
- an intermediate unit for transporting and positioning the bags or batches (usually conveyor surfaces) to
- an island for palletising products arriving, in which the bags or batches of products are suitably stacked on pallets, so that they can be sent to warehouses (which may or may not belong to the manufacturer) which subsequently ship the pallets.

Basically, the palletising island is divided into sub-stations positioned at the end of the packaging units and comprising:
- a first sub-station or island for receiving the bags fed out, connected to the conveyor surfaces and where the bags or batches are picked up and positioned by a logic unit (for example a robotic unit with Cartesian axes or "pick and place" unit) which positions the products along two or more axes to create a layer of products on a receiving belt or surface;
- a second sub-station for moving the layer of products obtained, consisting of a second logic unit (another robotic unit) having movable grippers for picking up the layer of products prepared and moving it to a pallet positioned at a predetermined point of the palletising island.

Each pick up unit examined up to now has a microprocessor unit with a relative panel for data entry on one hand, to allow the appropriate unit settings (product configurations, production speed, etc.) and, on the other hand for reading and machine diagnostics.

In addition, the palletising island has a microprocessor control system designed to programme and optimise the product layering geometry according to the data entered, that is to say, the type of product to be layered (bag or loose batch and relative dimensions) and the dimensions of the pallet to be used.

With suitable algorithms or direct commands from the operator, the system allows programming of the optimum arrangement of the products on the receiving surface to form the layer and in such a way as to optimise the movements of the robotic product pick and place unit.

Therefore, once programmed, said system controls the movement of the two robotic units operating in the palletising island.

This whole layering and palletising system is, so far, extremely rational and operatively acceptable, above all in the presence of bags of groups of products.

However, now, both for economic reasons and for retail distribution, there is a growing need for the palletising of batches of loose products without an overwrapping bag.

In practice, in this situation firstly the bagging unit must be disabled and the batches of products allowed to pass directly from the transport and positioning unit (for example a straightening unit) towards the intermediate unit for transporting and positioning batches to the palletising island, passing through the bagging unit.

To obtain this type of feed, the length and width of the batches would have to be defined, variable depending on the type of groups fed out of the straightening unit (that is to say, the configuration of the individual group understood to be the number of products, for example 4x2, 8x2, etc.), in addition to the feed sequence of the number of batches to the palletising island, depending on the programming done by the control system for the layering configurations on the pallets.

In other words, at present, there is a "break" in the connection between the palletising island and the straightening unit as regards a rational and programmed feeding of the loose batches towards the palletising island: this may involve an increase in the times required to set the individual machine units, but above all a slowing in product layer formation, since the number and arrangement of the batches being fed to the palletising island may not match the programming of the control system of the robotic units.

The aim of the present invention is therefore to overcome the above-mentioned disadvantages by providing a machine for producing groups of roll products with highly flexible operation and which can be used to form batches of products with or without an overwrap, it being possible to feed said batches to the palletising island with integrated control of the various operating units involved, in such a way as to optimise product feed upstream of the palletising island.

According to the invention, this aim is achieved by a machine for producing groups of products, in particular a machine for producing groups of roll products with the technical features described in one or more of the claims herein.

The technical features of the invention, with reference to the above aims, are clearly described in the claims below and its advantages are more apparent from the detailed description which follows, with reference to the accompanying drawings which illustrate a preferred embodiment of the invention provided merely by way of example without restricting the scope of the inventive concept, and in which:
- Figure 1 is a schematic plan view of a machine for producing groups of roll products in accordance with the present invention;
- Figure 2 is a schematic plan view of an alternative embodiment of the machine for producing groups of roll products in accordance with the present invention;
- Figure 3 is a schematic plan view of a third embodiment of the machine for producing groups of roll products in accordance with the present invention.

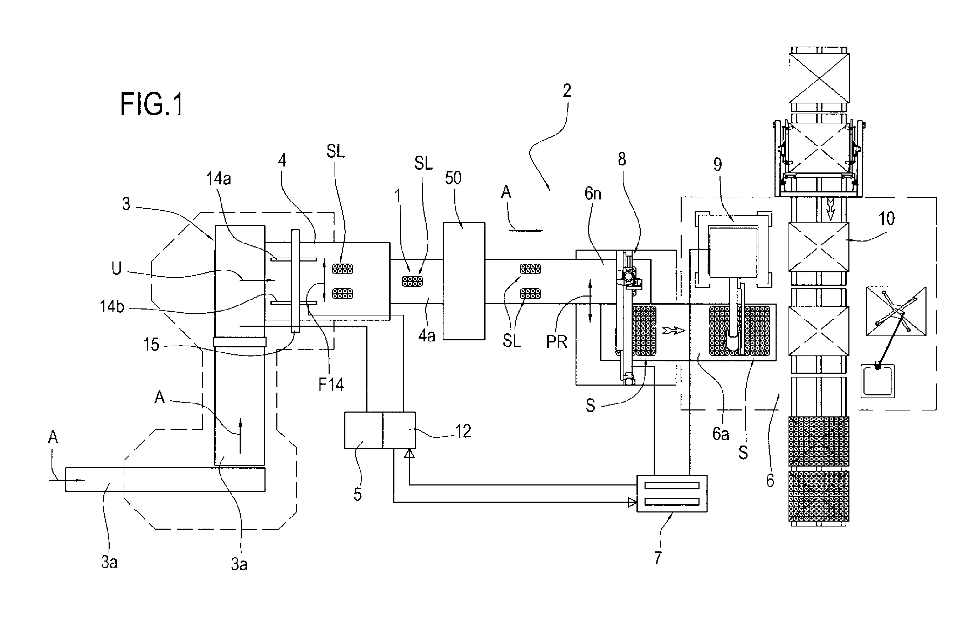

With reference to the accompanying drawings, and in particular Figure 1, the machine 2 according to the invention is used to produce groups 1 of products, in particular roll products for household and/or bathroom use.

In particular, these groups 1 of products each consist of a plurality of products, grouped together to form a configuration, and wrapped and closed in a sheet of wrapping film.

The machine 2 has a series of operating stations, along a feed line A, partly not described in detail, being of the known type and not strictly part of the invention.

The known stations are a unit for feeding the roll products to a unit for dividing the roll products into groups 1 (in different configurations depending on the machine settings) and a unit for wrapping and closing the groups 1 of products with the wrapping sheet.

In addition to these stations, the following are also present:
- a station 3 for grouping a plurality of groups 1 fed by suitable belts 3a connecting to the wrapping unit;
- a first surface 4 for receiving the plurality of groups 1 of products arriving from the station 3 to form a batch L of loose products;
- a first, programmable microprocessor logic unit 5, for checking and controlling the grouping station 3 and the first surface 4 (schematically illustrated with a block in the accompanying drawings);
- a palletising island 6 for the groups 1 of products fed from the first surface 4 and comprising a second microprocessor logic unit 7 for controlling and programming at least two robotic units 8 and 9 used to handle the groups 1 of products, so as to obtain, respectively, individual layers S of two or more groups 1 of products, and the relative positioning of the layers S on pallets 10.

More specifically, the grouping station 3 may, usually and by way of example only, be a known unit for straightening groups 1 of products arriving from the stations which produce said groups on the belts 3a (these two units are schematically illustrated in the accompanying drawings).

The station 3 unloads a batch L of groups 1 of products whose dimensions (width and length) are obtained according to the number of them and the type of configuration of the groups 1.

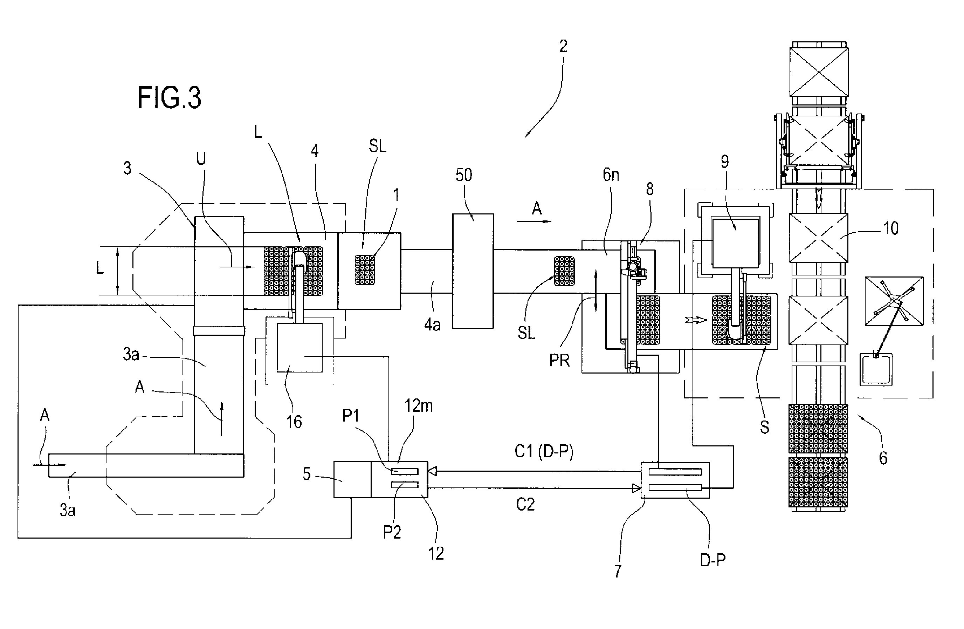

The first surface 4 receives the batches L unloaded from the grouping station 3 and allows them to be fed, by belts 4a, towards the palletising island 6. As illustrated in Figures 1 and 3, between the first surface 4 and the palletising island 6 there may be, in an example configuration, a bagging unit 50 (of the known type) for packaging the batches L with a sheet of film.

In this specific case, the batch L is fed in a compact state towards said unit 50, then, after being overwrapped, the bag formed in this way reaches the palletising island 6 for the above-mentioned layering and palletising operations.

In contrast, if the batch L of groups 1 of loose products must be layered and palletised without an overwrap, the bagging unit 50 is switched off and the groups 1 of loose products pass beyond the unit 50 and are fed to the palletising island 6.

This palletising island 6, also of the known type, may comprise, in a basic configuration (as already indicated) a first belt 6n on which the bags or groups 1 of products arrive (downstream of the unit 50 and along the feed line A) at the first robotic unit 8. The first belt 6n is, in practice, an extension of the first surface 4.

The first robotic unit 8 is of the known type with Cartesian axes movement, designed to allow the pick up, in sequence and according to a predetermined pick up program, of the groups 1, with a main movement perpendicular PR to the line A (and with relative axial and angular movements of the known type) and their positioning on a second belt 6a, located next to and parallel with the first belt 6n, so as to form a layer S of groups 1 of products to be palletised.

When the layer S is complete, the belt 6a transports the layer S of groups 1 of products to the operating zone of the second robotic pick up unit 9, allowing the latter to pick up (usually on four sides) the already complete layer S of groups 1 to be positioned directly on the pallet 10, again with sequential operation controlled by the second control logic unit 7.

In addition to the above, the machine 2 comprises:
- means 11 for forming sub-batches SL starting with the batch L of groups 1 of products, when required, these means being positioned between the grouping station 3 and the first surface 4, and connected to the first microprocessor logic unit 5;
- an interface unit 12, inserted between the first microprocessor logic unit 5 and the second microprocessor logic unit 7, and designed to allow a direct connection between the second logic unit 7 and the first logic unit 5, so as to programme at least the means 11 for forming sub-batches SL directly from the second logic unit 7 according to the parameters for making up the layers S in the palletising island 6.

In other words, the machine 2 is equipped with these means 11 for forming sub-batches SL which can be activated, preferably but without limiting the scope of the invention, in the presence of a pallet 10 formation with groups 1 of loose products and, in particular, which can be controlled, as regards the configurations and relative feeding of groups 1 to the first robotic unit 8, by the second logic unit 7 according to the layering parameters defined.

More precisely, the second logic unit 7 initially defines how the groups 1 shall be arranged (in the case of loose product) in each layer S according to product data (size of an individual group 1) and the size of the pallet 10, then programmes the pick up of the groups by the first robotic unit 8, optimising its outward and return movements.

Obviously, if the arrival of the groups 1 on the first belt 6n is defined simply by the batch L being fed out of the station 3, the times for pick up, movement/rotation of the groups 1 would also not coincide with the real pick up requirements programmed to be fulfilled by the first robotic unit 8.

In contrast, if the group 1 feed configuration could be programmed from the moment of outfeed from the station 3 according to layering step requirements, then layering would be extremely rapid.

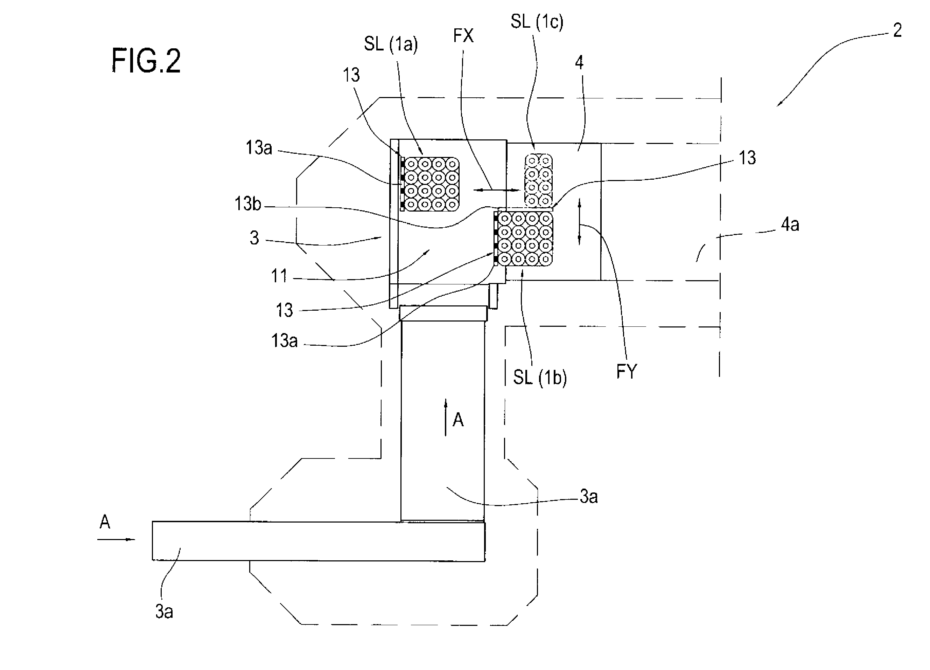

Looking in more detail at the technical aspects, the forming means 11 may comprise (see Figure 2) thrust and separation parts 13 designed to separate the groups 1 of products forming the original batch L into various sub-batches SL.

These parts 13, for example, may comprise at least two groups of vertical rods 13a and 13b, projecting from the first surface 4 and able to move along the first surface 4 according to two horizontal axes X and Y perpendicular to one another (see arrows FX and FY), so as to separate and/or separately feed various groups 1 of products forming the sub-batches SL.

Figure 1 shows a second possible construction of the forming means 11, which may comprise at least one pair of rigid walls 14a and 14b, slidably supported by an upper cross-member 15, and able to move relative to one another in both directions (see arrows F14), according to a trajectory perpendicular to a direction U of batch L outfeed from the station 3 and in such a way as to define the make-up of the sub-batches SL.

Figure 3 illustrates a more "extreme" embodiment of the forming means 11, which may comprise a third robotic unit 16 for selecting and positioning groups 1 of products in sub-batches SL, the means being positioned at the side of the first surface 4 and acting on the groups 1 of products positioned on the first surface 4.

The interface unit may comprise an electronic unit 12 for data transmission and entry connected to the two microprocessor logic units 5 and 7 and designed to receive and send data D for programming the parameters P for making up the sub-batches SL on the first surface 4 according to the layering program generated by the second logic unit 7 and controlled by the latter.

In particular, the electronic unit 12 for data transmission and entry may comprise a single, unique transmission channel C1 from the second logic unit 7 to the first logic unit 5, allowing, at least as regards the parameters P for making up the sub-batches SL, the presence of a single master logic unit for the first grouping station 3, the first surface 4 and the palletising island 6, consisting of the second logic unit 7.

Obviously, the electronic unit 12 for data transmission and entry may comprise a double transmission channel C1 and C2, for sending and receiving data, between the first and second logic units 5 and 7, so as to keep both logic units up to date regarding the operating parameters.

One possible embodiment could be that in which the electronic unit 12 is included in the first logic unit 5 and when required the forming means 11 can be directly controlled through it by the second logic unit 7.

Operations might also be speeded up by equipping the electronic unit 12 with memory banks 12m for saving corresponding predetermined operating parameters P1, P2, Pn, sent by the second logic unit 7, for the formation of sub-batches SL by the forming means 11. These could be activated, when needed, by the second unit 7.

Basically, the second logic unit 7 can control (see Figure 3) the feed, movement and/or separation of the individual groups or pluralities of groups 1 (see 1a, 1b and 1c in Figure 3) just fed out of the station 3 in a batch L, using the forming means 11 according to the requirements for optimised pick up in sequence by the first robotic unit 8.

Therefore, a machine structured in this way achieves the preset aims thanks to the presence of means for forming sub-batches of groups of products upstream of the palletising island and directly controlled by the second logic unit 7: this allows the step of layering the groups of products to be optimised and speeded up, effectively increasing the production capacity of the entire machine.

The invention described above is susceptible of industrial application and may be modified and adapted in several ways without thereby departing from the scope of the inventive concept. Moreover, all the details of the invention may be substituted by technically equivalent elements.

## Claims

1. A machine for producing groups (1) of products, each group consisting of a plurality of products, grouped together to form a configuration, and wrapped and closed in a sheet of wrapping film; the machine (2) comprising at least the following along a feed line (A):
- a station (3) for grouping a plurality of groups (1) ;
- a first surface (4) for receiving the plurality of groups (1) of products arriving from the station (3) to form a batch (L) of loose products;
- a first, programmable microprocessor logic unit (5), for checking and controlling the grouping station (3) and the first surface (4);
- a palletising island (6) for the groups (1) of products fed from the first surface (4) and comprising a second microprocessor logic unit (7) for controlling and programming at least two robotic units (8, 9) used to handle the groups (1) of products, so as to obtain, respectively, individual layers (S) of two or more groups (1) of products, and the relative positioning of the layers on pallets (10); the machine (2) being **characterised in that** it comprises:
- means (11) for forming sub-batches (SL) starting with the batch (L) of groups (1) of products, when required, these means being positioned between the grouping station (3) and the first surface (4), and connected to the first microprocessor logic unit (5);
- an interface unit (12), inserted between the first microprocessor logic unit (5) and the second microprocessor logic unit (7), and designed to allow a direct connection between the second logic unit (7) and the first logic unit (5), so as to programme at least the means (11) for forming sub-batches (SL) directly from the second logic unit (7) according to the parameters for making up the layers (S) in the palletising island (6).

2. The machine according to claim 1, **characterised in that** the forming means (11) comprise thrust and separation parts (13) designed to separate the groups (1) of products forming the original batch (L) into various sub-batches (SL).

3. The machine according to claim 2, **characterised in that** said thrust and separation parts (13) comprise at least two groups of vertical rods (13a, 13b), projecting from the first surface (4) and able to move along the first surface according to two horizontal axes (X, Y) perpendicular to one another, so as to separate and/or separately feed various groups (1) of products forming the sub-batches (SL).

4. The machine according to claim 1, **characterised in that** the forming means (11) comprise at least one pair of rigid walls (14a, 14b), slidably supported by an upper cross-member (15), and able to move relative to one another, in both directions, according to a trajectory perpendicular to a direction (U) of batch (L) outfeed from the station (3) and in such a way as to define the make-up of the sub-batches (SL).

5. The machine according to claim 1, **characterised in that** the forming means (11) comprise a third robotic unit (16) for selecting and positioning the groups (1) of products in sub-batches (SL), said third robotic unit being positioned at the side of the first surface (4) and acting on the groups (1) of products positioned on the first surface (4).

6. The machine according to claim 1, **characterised in that** the interface unit comprises an electronic unit (12) for data transmission and entry connected to the first and second microprocessor logic units (5, 7) and designed to receive and send data (D) for programming the parameters (P) for making up the sub-batches (SL) on the first surface (4) according to the layering program of the second logic unit (7) and controlled by the latter.

7. The machine according to claim 6, **characterised in that** the electronic data transmission and entry unit (12) comprises a single, unique transmission channel (C1) from the second logic unit (7) to the first logic unit (5), allowing, at least for the sub-batch (SL) make-up parameters (P), the presence of a single master logic unit for the first grouping station (3), the first surface (4) and the palletising island (6), consisting of the second logic unit (7).

8. The machine according to claim 6, **characterised in that** the electronic data transmission and entry unit (12) comprises a double transmission channel (C1, C2), for sending and receiving data, between the first and second logic units (5, 7).

9. The machine according to claims 6 to 8,
**characterised in that** the electronic unit (12) is included in the first logic unit (5) and when required the forming means (11) can be directly controlled through it by the second logic unit (7).

10. The machine according to claims 6 to 9,
**characterised in that** the electronic unit (12) has memory banks (12m) for saving predetermined operating parameters (P1, P2, Pn), sent by the second logic unit (7), for the formation of sub-batches (SL) by the forming means (11), the second unit (7) being able to activate these when needed.
